# EUROPEAN PATENT APPLICATION

(11) **EP 1 510 414 A1**
(43) Date of publication of application: **02.03.2005**
(21) Application number: 04017642.2
(22) Date of filing: 26.07.2004
(51) Int. Cl.: B60R 21/16

(54) **Curtain airbag apparatus**

(30) Priority: 01.09.2003 JP 2003308898; 11.09.2003 JP 2003319950; 22.04.2004 JP 2004126958
(71) Applicant: TAKATA CORPORATION, Minato-ku, Tokyo 106-8510 (JP)
(72) Inventor: Noguchi, Atsushi, Minato-ku Tokyo 106-8510 (JP)
(74) Representative: Banzer, Hans-Jörg, Dipl.-Ing.

(57) **Abstract**

A guide rod (7) for guiding the rear end of a curtain airbag (1) when the curtain airbag (1) is inflated from a roof side (2R) downward is attached to a C-pillar (2C) of a motor vehicle. The rear end of the curtain airbag (1) is connected to the guide rod (7) via a connecting belt (6). A space (S) for allowing passage of the connecting belt (6) is defined between a cabin-side surface (2f) of the C-pillar (2C) and an edge (9e) of a pillar garnish (9). The space (S) is closed by a lip portion (10b) of a weather strip (10) mounted to the C-pillar (2C). The connecting belt (6) includes a metallic wire (6a) and a rubber tube (6b).

## Description

### [Technical Field]

The present invention relates to a curtain airbag (curtain-shaped airbag) which is deployed along the side surface in a vehicle cabin.

### [Background Art]

In a motor vehicle provided with a curtain airbag apparatus, when the motor vehicle is subjected to a side collision, or is rolled sideways, the curtain airbag is inflated along the side surface (for example, a door or a pillar) in the vehicle cabin downwardly of the vehicle body by gas from an inflator, so that the head of an occupant is protected, as well as the occupant is prevented from being thrown out from the vehicle when a window is opened.

US Patent Publication No. 6,237,938 discloses provision of a guide member for guiding the rear end of the curtain airbag which is inflated along the side surface in the cabin downwardly of the vehicle body along the pillar on a C-pillar.

The guide member of the above patent includes a member shaped like a box in cross section, which is referred to as a track, and a slider member disposed in the track and movable in the longitudinal direction of the track, which is referred to as an element, and a connecting belt provided at the rear end of the curtain airbag, which is referred to as a tether, is tied-in with the element. In order to prevent the slider member and the rear end of the curtain airbag having moved downward from returning upward, one-way clutches are provided substantially along the whole length of the track at regular intervals.

Mounting flanges are provided at the upper end and the lower end of the track, and each flange is attached to the C-pillar with a bolt or a screw.

Generally, the guide member described above is covered by a pillar garnish. When the curtain airbag is inflated, the connecting belt slides and moves downward with respect to the pillar garnish so as to tear the pillar garnish, or to move the side portion of the pillar garnish away from the pillar.

It may be configured such that a space is provided between the pillar garnish and the pillar, and the space is closed by a weather strip. In this case, when the curtain airbag is deployed, the connecting belt moves downward so as to deform the weather strip and open the space.

According to the configuration in the related art, since the connecting belt slides with respect to the pillar garnish or the weather strip when the curtain airbag is deployed as described above, it is necessary to provide the connecting belt a strength that can resist sliding friction, and hence to employ a thick or wide connecting belt to a certain extent.

It is an object of the present invention to provide a curtain airbag apparatus which can sufficiently resist friction applied when the curtain airbag is deployed even when the connecting belt is thin.

### [Means for Solving the Problems]

This object is achieved by a curtain airbag apparatus according to claim 1. The dependent claims define preferred and advantageous embodiments of the invention.

A curtain airbag apparatus according to the present invention includes a curtain airbag which is deployed downward along the side surface in a vehicle cabin, a guide member extending in the vertical direction and attached to the pillar of a vehicle, and a connecting belt extending from the curtain airbag and connecting to the guide member, and is characterized in that the connecting belt is formed of metallic wire at the portion which comes into contact with an interior member of the vehicle at least when the curtain airbag is deployed.

According to an embodiment of the present invention, the metallic wire is coated by rubber or resin.

According to an embodiment of the present invention, the interior member of the vehicle includes a pillar garnish mounted to the pillar of the vehicle and covering the guide member, and a closing member for closing a space defined between the side portion of the pillar garnish and the cabin-side surface of the pillar, and when the connecting belt moves downward in the space upon deployment of the curtain airbag, the closing member is pressed by the connecting belt and is deformed so as to open the space.

### [Advantages]

In the curtain airbag apparatus of the present invention, when the inflator is activated and the curtain airbag is inflated downward in case of emergency of the vehicle, the connecting belt moves downward along the guide member. In this case, although the connecting belt slides with respect to the interior member of the vehicle and hence is subjected to friction, since the portion that comes into contact with the interior member of the vehicle is formed of metallic wire, it is prevented from becoming damaged by friction. Since the metallic wire has a high strength, a wire having a small diameter can be employed.

By covering the metallic wire with rubber or resin, its corrosion resistivity increases. Also, the metallic wire is prevented from coming into direct contact with the weather strip or the pillar garnish and hence partly cutting or giving damages to them.

Referring now to the drawings, an embodiment of the present invention will be described.

### [Brief Description of the Drawings]

Fig. 1 is a schematic side view of a vehicle cabin provided with a guide mechanism for a curtain airbag according to an embodiment of the present invention.
Fig. 2(a) is a cross-sectional view taken along the line II-II in Fig. 1(a), and Fig. 2(b) is a cross-sectional view showing a state in which a connecting belt passes through the portion of the cross-section in Fig. 2(a).
Fig. 3 is a perspective view showing the curtain airbag and a guide rod.

### [Detailed Description of an Embodiment]

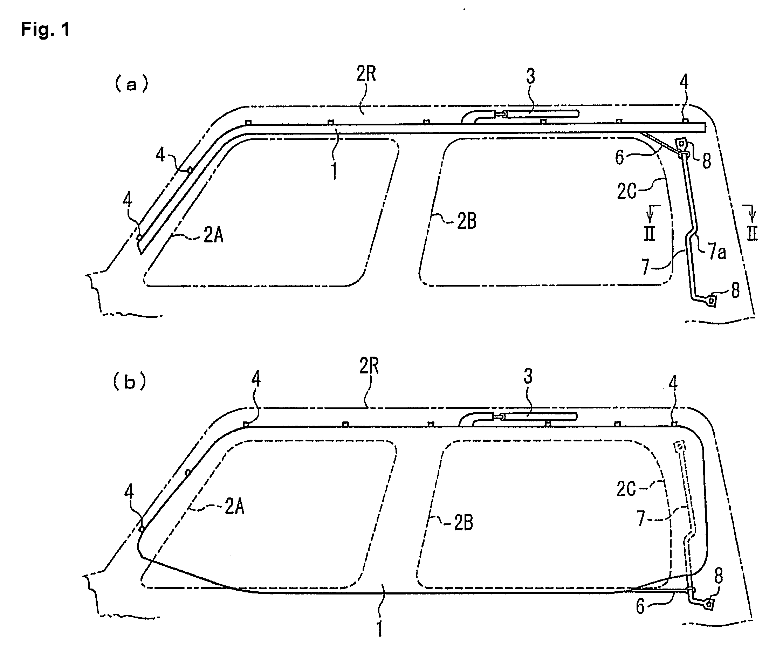

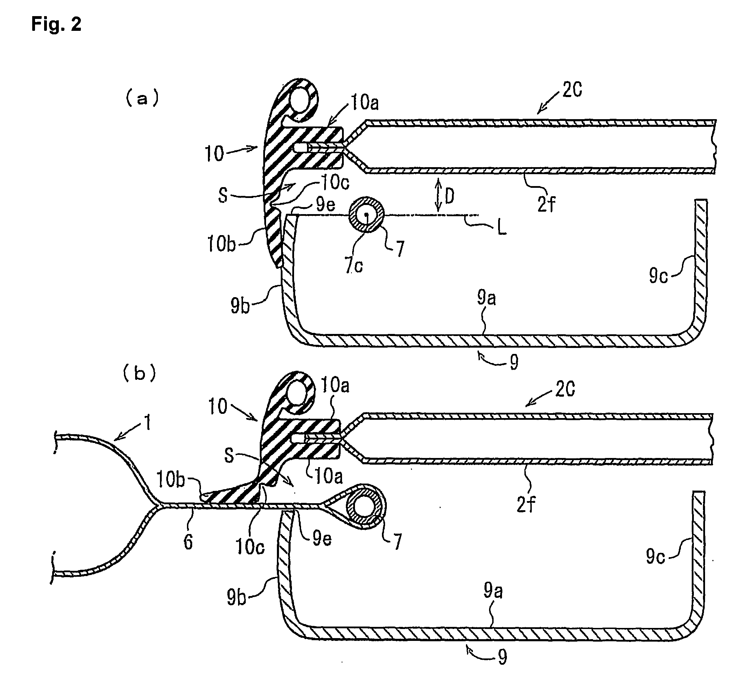

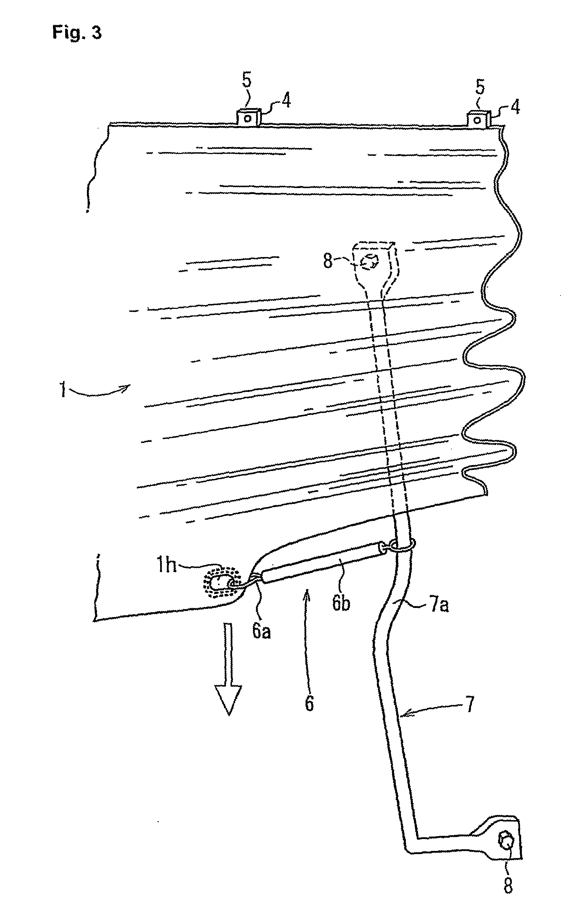

Fig. 1 is a schematic side view of a vehicle cabin provided with a guide mechanism for a curtain airbag according to an embodiment of the present invention, in which (a) shows the curtain airbag in the non-inflated state, and (b) shows the curtain airbag in the inflated state. Fig. 2(a) is a cross-sectional view taken along the line II-II in Fig. 1(a), and Fig. 2(b) is a cross-sectional view showing a state in which a connecting belt passes through the portion of the cross-section in Fig. 2(a). Fig. 3 is a perspective view showing the curtain airbag and a guide rod.

In this embodiment, a curtain airbag 1 is disposed from an A-pillar 2A to a roof side 2R of a motor vehicle in a state of being folded longitudinally in the fore-and-aft direction. The rear portion of the curtain airbag 1 extends up to the portion above a C-pillar 2C. Reference sign 2B designates a B-pillar. The curtain airbag 1 starts inflating by a supply of gas from an inflator 3 when the motor vehicle is subjected to a side collision or turned sideways, and is inflated and deployed downwardly of the vehicle body along the side surface in the cabin, such as a door and the respective pillars 2A, 2B, and 2C.

As shown in Fig. 3, lugs 4 are provided on the upper edge of the curtain airbag 1, and the lugs 4 are secured to the roof side portion 2R with fixtures 5 such as bolts or rivets. The front end of the curtain airbag 1 is secured to the A-pillar 2A.

An end of a connecting belt 6 is connected to the rear portion of the lower edge of the curtain airbag 1. In this embodiment, the connecting belt 6 includes a metallic wire 6a and a rubber tube 6b for covering the metallic wire 6a.

A small hole 1h is formed at the rear portion of the lower edge of the curtain airbag 1, and the loop-shaped front end of the wire 6a is inserted into the small hole 1h. The periphery of the small hole 1h is reinforced by a patch cloth (filler cloth) or by reinforcing stitches.

The rear end of the wire 6a is also formed into a loop, and the loop-shaped portion is slidably fitted on the guide rod 7.

It is also possible to provide a ring at the end of the wire 6a and engage the ring with the small hole 1h or a guide rod 7.

The rubber tube 6b is fitted on the linear portion of the wire 6a except for the loops at the front end and the rear end.

The guide rod 7 as a guiding member for guiding the rear end of the curtain airbag 1 along the C-pillar 2C via the connecting band 6 when the curtain airbag 1 is inflated downwardly of the vehicle body along the C-pillar 2C is mounted to the C-pillar 2C of the motor vehicle. The guide rod 7 extends in the vertical direction of the vehicle body along the C-pillar 2C.

The guide rod 7 extends entirely or partly of the range of movement of the end of the curtain airbag 1 from a state in which the curtain airbag 1 is folded to a state in which downward deployment is completed.

The guide rod 7 is formed of a rod-shaped member and is fixed to the C-pillar 2C with bolts 8 at the upper end and the lower end. The intermediate portion of the guide rod 7 is bent into substantially a crank shape, whereby an anchoring portion 7a for the connecting band 6 is provided. The anchoring portion 7a serves as a stopper for preventing the connecting belt 6 from being retracted upwardly of the anchoring portion 7a.

The guide rod 7 is positioned apart from a cabin-side surface 2f of the C-pillar as a whole by a predetermined distance except for the upper and lower ends thereof.

A pillar garnish 9 is provided so as to cover the cabin side of the C-pillar 2C. The pillar garnish 9 has a substantially angular C-shape in cross section, and includes a main plate portion 9a which extends substantially parallel with the cabin side surface 2f of the C-pillar 2C, and side plate portions 9b, 9c standing from the main plate portion 9a toward the C-pillar 2C. The side plate portion 9b is positioned on the door-side of the C-pillar 2C. There is provided a space S for allowing the connecting belt 6 to pass downward between an edge 9e of the side plate portion 9b on the side of the C-pillar 2C and the cabin-side surface f of the C-pillar 2C.

The distance between the edge 9e and the cabin-side surface 2f is shown as D in Fig. 2(a). The distance D is defined as a distance between a line L which passes the edge 9e and extends in parallel with the cabin side surface 2f and the cabin side surface 2f. In this embodiment, a center axis 7c of the guide rod 7 is positioned above the line L or on the side of the cabin-side surface 2f with respect thereto. Accordingly, the distance between the center axis 7c and the cabin-side surface 2f is equal to, or smaller than, the distance D between the edge 9e and the cabin-side surface 2f.

As shown in Fig. 2, a weather strip 10 formed of rubber, synthetic resin, or the like is mounted to the C-pillar 2C. The weather strip 10 includes clamping portions 10a formed of a pair of parallel strips, and the weather strip 10 is secured to the C-pillar 2C so that the clamping portions 10a, 10a clamp a flange of the C-pillar 2C.

The weather strip 10 includes a lip portion 10b extending toward the cabin, and the lip portion 10b closes the space S by overlapping the side plate portion 9b of the pillar garnish 9.

The lip portion 10b is provided with a deformation guiding portion 10c for guiding curvature deformation of the lip portion 10b so as to move away from the space S as the connecting band 6 passes through the space S. In this embodiment, the deformation guiding portion 10c is formed of a recessed groove extending in the vertical direction formed on the backside (the surface facing the inner side of the pillar garnish 9 via the space S) of the lip portion 10b as shown in Fig. 2(a).

Although not shown in the drawing, an A-pillar garnish provided on the A-pillar 2A, and a roof side garnish provided on the roof side 2R cover the folded body of the curtain airbag 1.

In a guide mechanism for the curtain airbag thus configured, when the inflator 3 is activated upon the side collision, sideway roll-over or the like of a vehicle, the curtain airbag 1 starts inflating. The curtain airbag 1 pushes and opens the A-pillar garnish and the roof-side garnish or breaks along a weakened line which is formed in advance, and then is deployed downward along the side surface in the vehicle cabin. At the rear portion of the curtain airbag, upon deployment, the connecting belt 6 moves along the guide rod 7, and the curtain airbag 1 finally reaches the lower portion of the guide rod 7 as shown in Fig. 1(b), so that the curtain airbag 1 becomes a tensed state with the lower edge thereof tightened. The curtain airbag 1 thus inflated can receive an occupant and absorb impact, as well as prevents the occupant from being thrown out of the vehicle.

When the connecting belt 6 of the curtain airbag 1 moves along the guide rod 7 as described above, as shown in Fig. 2(b), the connecting belt 6 moves downward in the space S as if it driven away the lip portion 10b of the weather strip 10. Since the lip portion 10b is provided with the deformation guiding portion 10c, the connecting belt 6 passes through the space S while bending the lip portion 10b easily toward the cabin.

In this case, although the connecting belt 6 receives frictional drag from the weather strip 10 or the pillar garnish 9, since the main body of the connecting belt 6 is formed of the metallic wire 6a, the connecting rod 6 can sufficiently resist friction, and the curtain airbag 1 and the guide rod 7 are connected until the final deployed configuration is obtained.

Since the portion of the metallic wire 6a except for the loop portion at both ends is covered with the rubber tube 6b, the metallic wire 6a is prevented from cutting or giving damages to the weather strip 10 or the pillar garnish 9.

The above described structure is simply an example of the present invention, and modifications other than that shown above are also possible. For example, although the metallic wire 6a of the connecting belt 6 is covered by the rubber tube 6b in the above-described embodiment, it may be covered by a synthetic resin tube. Alternatively, the metallic wire can be coated by applying rubber or resin. The front end which comes into contact with the small hole 1h can also be coated with rubber or resin. When the coating resin is highly slidable, the portion which slight on the guide rod 7 can also be coated by such a resin.

While the guide member (guide rod) is mounted to the C-pillar in the above-described embodiment, it is also possible to mount the guide member to the pillars other than the C-pillar (for example, the B-pillar or the D-pillar).

In the present invention, material of the guide rod is not specifically limited, and may be various materials such as metal, synthetic resin, and so on. While the guide rod is a tubular member having a hollow circular cross section as shown in the drawings in the above-described embodiment, it may take the form of a solid rod, and the cross-section can take various configurations. The metallic wire may be a stainless wire, for example. The wire can be a single wire, or may be a stranded cable (wire rope).

## Claims

1. A curtain airbag apparatus comprising:
a curtain airbag (1) which is deployed downward along the side surface in a vehicle cabin;
a guide member (7) extending in the vertical direction and attached to a pillar (2C) of the vehicle; and
a connecting belt (6) extending from the curtain airbag (1) and connecting to the guide member (7); **characterized in that** the connecting belt (6) is formed of metallic wire (6a) at the portion which comes into contact with an interior member of the vehicle at least when the curtain airbag (1) is deployed.

2. A curtain airbag apparatus according to Claim 1, **characterized in that** the metallic wire (6a) is coated by rubber or resin.

3. A curtain airbag apparatus according to Claim 1 or 2, **characterized in that** the interior member of the vehicle comprises a pillar garnish (9) mounted to the pillar (2C) of the vehicle and covering the guide member (7), and a closing member (10) for closing a space defined between the side portion of the pillar garnish (9) and the cabin-side surface of the pillar (2C),
wherein the closing member is adapted to be pressed by the connecting belt (6) and deformed so as to open the space when the connecting belt (6) moves downward in the space upon deployment of the curtain airbag (1).
